# EUROPEAN PATENT APPLICATION

(11) **EP 4 714 786 A1**
(43) Date of publication of application: **25.03.2026**
(21) Application number: 24201603.8
(22) Date of filing: 20.09.2024
(51) Int. Cl.: B62D 5/04, B62D 15/02, B62D 5/00, B62D 6/00, B62D 9/00

(54) **A METHOD FOR MONITORING A VEHICLE STEERING SYSTEM AND A MONITORING SYSTEM**

(71) Applicant: KB Intellectual Property GmbH & Co. KG, 82049 Pullach (DE)
(72) Inventor: JUNDT, Oliver, 74394 Hessigheim (DE)

(57) **Abstract**

A method for monitoring a steering system (50) of a vehicle by a monitoring system (100) is disclosed. The steering system (50) is configured to set steering angles (52) based on provided control signals, the monitoring system (100) being independent from the steering system (50). The method includes receiving (S110), by the monitoring system (100), a set steering angle (52) and an actual steering angle (54); determining (S120), by the monitoring system (100), a faulty deviation between the actual steering angle (54) and the set steering angle (52) indicating an error effect; and mitigating (S130), by the monitoring system (100), the faulty deviation by measures suitable to weaken the error effect.

## Description

The present invention relates to a method for monitoring a vehicle steering system, a monitoring system and, in particular, to a monitoring of an active steering system and countermeasures in the event of faults.

Active steering systems allow to set a steering angle based upon (electronic) control signals provided by the steering system. Active steering systems are needed for autonomous operations of vehicles to ensure that appropriate steering angles are applied to safely operate the vehicle. For maintaining a high level of safety, vehicles shall control all safety relevant components - such as the steering - in a redundant way. For example, conventional steering systems are usually designed in accordance with ASIL-D, which is the highest level of Automative Safety Integrity Leve (ASIL). For this, conventional steering systems have typically access to associated or dedicated sensors to determine and monitor parameters such as the steering angle reliably.

Notwithstanding the high level of security, there are situations where the steering system is still unable to set the steering angle appropriately or achieves only insufficient results and interventions are needed. One cause for this faulty situation may be a malfunctioning of the sensor(s) on which the steering system relies or that the steering is for some other reason unable to achieve a set steering angle (e.g. due to an overload).

Therefore, to maintain the high-level safety, there is a need for a cross check whether the steering system operates correctly. In particular, there is a demand to detect any deviations between the actual steering angles and a set steering angles.

At least some of the problems described before are overcome by a method of claim 1 or by a system of claim 9. The dependent claims refer to further advantageous realizations of the subject matter of the independent claims.

The present invention relates to a method for monitoring a steering system of a vehicle by a monitoring system. The steering system is configured to set steering angles based on provided control signals. The monitoring system is independent from the steering system. The method includes:
- receiving, by the monitoring system, a set steering angle and an actual steering angle;
- determining, by the monitoring system, a faulty deviation between the actual steering angle and the set steering angle indicating an error effect; and
- mitigating, by the monitoring system, the faulty deviation by measures suitable to weaken the error effect.

Therefore, the steering system is monitored from outside by another system which serves a different purpose. In particular, the monitoring system is not controlled by the control unit of the steering system. According to embodiments, the monitoring can be performed independently of the concrete driving situation, also in a straight-line driving situation where no deviation should occur (if everything functions correctly). However, the monitoring can also be triggered by particular driving situations (bevor or in curves or for straight-line driving) or occasionally following a predetermined schedule. Preferably, however, the monitoring runs permanently.

Optionally, the faulty deviation can be determined as follows. A deviation between the actual steering angle and the set (or target) steering angle may be tolerable if it is below a (predetermined) threshold. Then, the determination of the faulty deviation may include detecting a deviation that exceeds the threshold. The threshold may indicate an absolute value or a relative value for the deviation. Optionally, there are a first threshold for the absolute value and a second threshold for the relative value. Exceeding one or both thresholds may trigger an angular correction for the steering angle or may trigger at least a lowering of the vehicle speed. For example, the monitoring system may utilize the angular correction that is higher (or lower or the first one occurring) for the step of mitigating. For example, the step of mitigating can be carried out as long as the faulty deviation has disappeared (e.g. is within a tolerable fluctuation range). It is understood that using an absolute value for the threshold (e.g. +/- 5° or +/- 10°) may be more suitable for driving situation where the vehicle moves almost along a straight line. In other situations, the relative value for the threshold (e.g. +/- 5% or +/- 10% or +/- 30%) may be more suitable.

Optionally, embodiments may also monitor correct values of the measured actual steering angle. This monitoring can be performed by comparing the actual steering angle with other vehicle dynamic measured or estimated values like lateral acceleration or yaw rate. E.g., in straight-line driving situation (e.g. detected by yaw rate and lateral acceleration close to zero), also the measured actual steering angle must be close to zero. Alternatively, or additionally, an active steering (e.g. to the left and to right) may be performed at standstill or at low speed, while the monitoring is performed. This has the advantage that an error is already detected in a safe situation (before an autonomous drive will start at higher speed). According to embodiments also a mixture of both thresholds can be used to ensure that the faulty deviation does not exceed a total tolerable threshold.

Optionally, the step of mitigating includes at least one of the following interventions:
- reducing a vehicle speed,
- triggering a steer-by-braking actuation, SBB (e.g. at a front steered axle),
- performing wheel-specific braking interventions (braking more or less),
- performing an engine intervention,
- activating a sustained-action brake (e.g. activating a retarder).

Optionally, the interventions are applied with a strength dependent on a level of the faulty deviation. This level may depend on a rate of change of the faulty deviation (e.g. its gradient). The intervention such as SBB can be continued until an alignment between the actual steering angle and the set steering angle is achieved. The rate of change or the gradient can be determined by continuous monitoring to obtain the deviation as a function of time so that its derivative gives the rate of change. Therefore, the degree of countermeasures can be adapted accordingly.

Optionally, the steering system is configured to receive the actual steering angle from a sensor associated with the steering system. The monitoring system may receive the actual steering angle from a vehicle component which is different from the sensor associated with the steering system. The vehicle component may be one or more of the following: an electronic stabilization program (ESP), an acceleration sensor, an estimator, rotational speed sensor, a position tracking via a positioning system, from maps in combination with positional sensors, and others. For example, from digital maps one can derive the curvature radius of a road curve and in combination with the position of the vehicle on the road, the system can estimate the steering angle needed to pass the curve. Likewise, other systems might be able to estimate the current steering angle without relying on the steering sensor which is used by the steering system. For example, the steering angle can be derived from the lateral acceleration (e.g. the ESP can measure this) and the longitudinal speed of the vehicle (e.g. measured by speedometer). Furthermore, differences of wheel speeds on both sides of a steered axle may be used to estimate the current steering angle.

However, according to further embodiments, also the steering sensor utilized by the steering system can be utilized to derive any deviation between the sensor values of different sensors. The sensor of the steering system may operate flawless, but the steering system may have problems to achieve the set steering angle fast enough. Thus, support of the steering system may be needed to improve the safety.

Optionally, the vehicle includes an electronic stabilization program, ESP, configured to stabilize the vehicle in critical driving conditions, and wherein the step of mitigating is performed independently of stabilizing actions performed by the ESP.

Optionally, the monitoring system is one of the following: a braking system, an engine control system, an autonomous driving system, a transmission control system, an electronic control unitor may be included in one of them.

Further embodiments relate to a monitoring system for a steering system of a vehicle, wherein the steering system is external to the monitoring system and is configured to set steering angles based on a provided control signal (i.e. it is an active steering system). The monitoring system includes a processor and a receiver adapted to receive a set steering angle and an actual steering angle. The processor is adapted:
- to determine a faulty deviation between the actual steering angle and the set steering angle indicating an error effect; and
- to mitigate the faulty deviation by measures suitable to weaken the error effect.

The vehicle may be at a partially autonomously operable utility vehicle (e.g. a truck or bus) and wherein the receiver is an interface for a vehicle bus (e.g. a CAN bus) to receive data such as the actual/set steering angle. Within the present disclosure, the autonomously operation shall include all degrees of autonomous driving: from an assistant driving (e.g. a lane keeping assist) to a partially or fully autonomous driving. The actual steering angle can again be obtained from the external vehicle steering system or a vehicle control unit or any other vehicle component.

Further embodiments relate to a vehicle, in particular a utility vehicle, with an active steering system and vehicle system. The steering system and the vehicle system are independent vehicle components, and the vehicle system includes a monitoring system as set out before. The vehicle may be operated at least partially autonomously over at least some time.

Embodiments provide the following advantages. They provide an independently check whether the set steering angle (target value) corresponds to the actual value. This increases safety. Likewise, embodiments provide an additional monitoring of information interfaces between the requesting system and the active steering system to ensure that the information is correctly detected and transmitted. An incorrect steering angle can have serious consequences for the safety and, therefore, the steering system should not blindly be trusted, or measures are justified that go beyond the measures in the active steering system.

The method described above may also be implemented in software, or as a computer program product and the order of steps may not be important to achieve the desired effect. Therefore, embodiments relate also to a computer program having a program code for performing the method, when the computer program is executed on a processor, or to a machine-readable storage medium characterized by having instructions codes stored therein adapted to perform the steps of the method, wherein said instructions codes are executed on a computer or processor.

Some examples of the systems and/or methods will be described in the following by way of examples only, and with respect to the accompanying figures, in which:
- Fig. 1: depicts a schematic flow diagram of a method for monitoring a vehicle steering system according to an embodiment of the present invention.
- Fig. 2: depicts a monitoring system for monitoring a vehicle steering system within a vehicle infrastructure according to further embodiments.

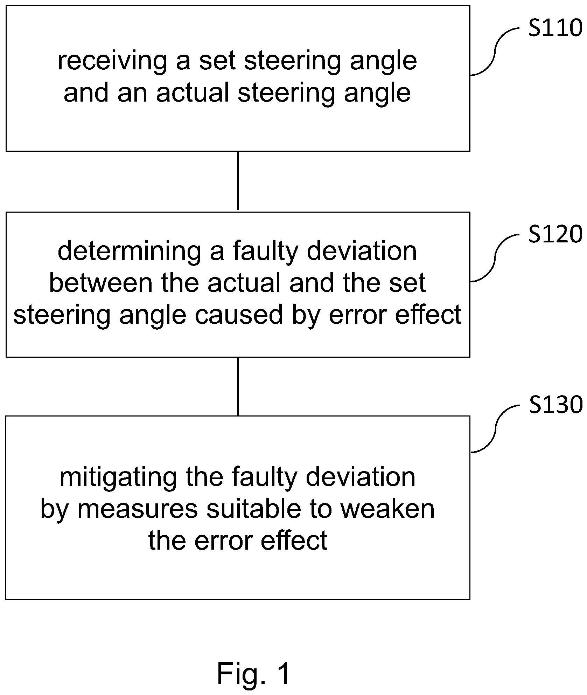

**Fig. 1** depicts a schematic flow diagram of a method for monitoring a steering system of a vehicle. The steering system is configured to set steering angles based on a provided control signal. The method is performed by a monitoring system which is independent from the vehicle steering system. The method includes the steps of:
- receiving S110 a set steering angle and an actual steering angle;
- determining S120 a faulty deviation between the actual steering angle and the set steering angle indicating an error effect; and
- mitigating S130 the faulty deviation by measures suitable to weaken the error effect.

Embodiments thus provide not only an additional and independent supervision but also means to rectify (or at least mitigate) any erroneous behavior of the steering system. There may be many reasons for the (faulty) deviation. For example, a sensor may be malfunctioning, the calculation is performed inaccurately, the steering system is not able to achieve the set steering angle (e.g. acting forces are too high), the steering system has not yet recognized the deviation (e.g. the steering system may operate erroneously very slowly) or other reasons. All these are examples of erroneous effects associated with the steering system.

Embodiments achieve this by reading and comparing the target (set) and the actual steering angles in or by the monitoring system and this monitoring system is not the active steering system and not part thereof. Next, if a deviation is detected that exceeds an exemplary threshold, measures can be taken to compensate for or at least to minimize the erroneous effect (i.e. the effect that caused the faulty deviation). When calculating or determining the threshold, an absolute value (i.e. a value that is at least independent of the target and actual values) and/or a relative value (percentage value that at least dependent on the target steering angle) may be used.

The measures can be manifold. For example, a vehicle speed may be reduced, or a steering angle can be corrected by means of a steer-by-brake actuation (SBB). By an SBB actuation a direction of the vehicle can be changed by means of wheel-specific braking interventions on at least one axle (e.g. front axle) with the aim of achieving a desired steering angle. Advantageously, the strength of the intervention depends on the (faulty) deviation between the target and actual steering angle. Likewise, a length of the intervention can be set until the faulty deviation has been overcome.

Optionally, the method includes further steps defining functions as will be described for the monitoring system below. It will also be appreciated that the method steps can be carried out in different order.

Moreover, this method may also be a computer-implemented method. A person of skill in the art would readily recognize that steps of various above-described methods may be performed or caused by programmed computers. Embodiments are also intended to cover program storage devices, e.g., digital data storage media, which are machine or computer readable and encode machine-executable or computer-executable programs of instructions, wherein the instructions perform some or all of the acts of the above-described methods, when executed on the computer or processor.

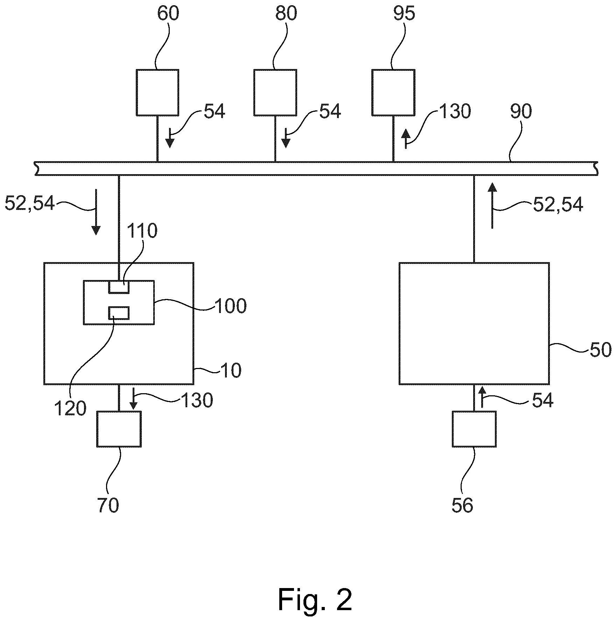

**Fig. 2** depicts a monitoring system 100 within a vehicle infrastructure configured to carry out the method of Fig. 1. The vehicle infrastructure includes a vehicle system 10, the steering system 50 with an associated sensor 56 to determine an actual steering angle 54, a vehicle component 60, an electronic stabilization program (ESP) 80, at least one electronic control unit 95 (ECU), and a vehicle bus 90 (e.g. a CAN bus). The vehicle system 10 is adapted to control at least one actuating device 70 and includes the monitoring system 100 as part thereof. The vehicle system 10 is independent from the steering system 50. It may be a braking system, a vehicle control unit, an engine control system, a transmission controller, an autonomous driving system or any other system which controls at least one vehicle function different from primary steering (but it may provide a secondary steering such as steer-by-braking, SBB).

The vehicle may be a commercial vehicle (truck with or without a trailer, bus) which may be equipped with systems to allow at least temporary a (semi-) autonomous driving. For example, the autonomous driving system (as an example for the control unit 95) calculates a target steering angle 52 in order to follow a route ahead of the vehicle.

At least some of the mentioned components (e.g. the monitoring system 100 and the steering system 50) can be connected with each other by the vehicle bus 90 which may be a CAN (controlled area network) bus to exchange information and data such as the steering angles (its actual value and/or its set value) or control signals representing interventions 130 to control vehicle components (steering, braking, engine, transmission, retarders/endurance brakes etc.)

The ESP system 80 is able to detect a critical situation, where the vehicle becomes instable, and initiates countermeasure to improve the stability of the vehicle. These countermeasures may include brake interventions for one or more wheels, acceleration and other measures suitable to improve the stability. The ECU 95 may be any ECU of the vehicle such as an engine ECU, a transmission ECU, an autonomous driving system, or some other control unit which controls at least one function of the vehicle. The vehicle component 60 may be adapted to estimate or sense or determine the actual steering angle 54 and it may rely on data obtained from other components not used by the steering system 50. For example, the actual steering angle 54 can be derived from an estimation based on data from the ESP 80 (e.g. lateral acceleration), from an acceleration sensor, from one or more rotational speed sensors (differences of wheel speeds, e.g.), positional tracking (e.g. using a positioning system such as GPS), maps in combination with positional sensors, and other sources.

The vehicle steering system 50 is external to the monitoring system 100 and it is an active steering system implying that it can set steering angles 52 based on a provided (electronic) control signal (e.g. from a steering controller). The monitoring system 100 includes a receiver 110 and one or more processors 120. It may include further components such as data storage or network devices. The receiver 120 is able to receive a set steering angle 52 and/or an actual steering angle 54. The processor 120 is adapted to determine the faulty deviation between the actual steering angle 54 and the set steering angle 52 indicating an error effect (e.g. at the steering system 50). The processor 120 is further adapted to mitigate the faulty deviation by measures or interventions 130 suitable to weaken the error effect.

According to embodiments various interventions 130 can be taken to mitigate the situation. For example, the vehicle system 10 accommodating the monitoring system 100 may be the braking system, a transmission control system, an engine control system or any other system in the vehicle and may couple to the actuating devices 70. The actuating device(s) 70 may be one or more brake actuators to brake wheels asymmetrically with respect to the left- and right-hand side to achieve also a steering effect (steer-by-brake, SBB). For this, only one wheel on a steered axle may be braked to generate a yaw moment that steers the vehicle. At the same time, this will decelerate the vehicle which further improves the safety situation of the vehicle. Additionally, or alternatively, the braking system may simply brake the vehicle or a trailer (e.g. by standard symmetric braking) to quickly reduce the vehicle speed, where an incorrect steering angle generally does not have such severe consequences as for higher speeds. Moreover, this may support the steering system to equalize the set steering angle with the actual steering angle.

The interventions 130 of the monitoring system 100 may also have involve other vehicle components to lower the vehicle speed. For example, through the control unit 95, the vehicle system 10 may employ a sustained-action brake such as a retarder or may shift a gear or may control the engine to lower vehicle speed. All these interventions 130 are suitable measures to reduce the speed to mitigate the faulty deviation between the set and actual steering angles 52, 54.

In summary, if the vehicle system 10 is the braking system with the integrated the monitoring system 100, embodiments overcome the problems of the conventional systems by:
- First, the monitoring system 100 may read the target steering angle 52, which the autonomous system 95 may send to the active steering system 50 via the CAN bus 90 connection.
- Then, the monitoring system 100 may read the actual steering angle 54. This can be sent by the active steering system 50 on the CAN bus 90 or, advantageously, the exemplary braking system 10 uses a steering wheel angle which is independent of the active steering system 50 and can be obtained from ESP 80 or from ESP applications.
- Next, the monitoring system 100 may calculate the difference between the target steering angle 52 and actual steering angle 54 and may determine whether the calculated difference exceeds the relative threshold of, e.g., 10% of the target steering angle 52 and/or an absolute threshold value of, e.g., 10° (e.g. the higher of the two values may be used).
- Finally, the monitoring system 100 may cause the brake system 10 to decelerate the vehicle. For this, the braking system 10 may trigger various interventions 130 such as: motor intervention, activation of retarders/endurance brakes, deceleration by activating the friction brake. In addition, the SBB function may attempt to achieve the target steering angle 52 by intervening on one side of the front axle.

The description and drawings merely illustrate the principles of the disclosure. It will thus be appreciated that those skilled in the art will be able to devise various arrangements that, although not explicitly described or shown herein, embody the principles of the disclosure and are included within its scope.

Functions of various elements shown in the figures, including any functional blocks labeled such as "monitoring system", "vehicle component" may be provided through the use of dedicated hardware, such as "a signal provider", "a signal processing unit", "a processor", "a controller", etc. as well as hardware capable of executing software in association with appropriate software. Moreover, any entity described herein as "device", may correspond to or be implemented as "one or more modules", "one or more devices", "one or more units", etc. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included.

It should be appreciated by those skilled in the art that any block diagrams herein represent conceptual views of illustrative circuitry embodying the principles of the disclosure. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Furthermore, the following claims are hereby incorporated into the Detailed Description, where each claim may stand on its own as a separate example. While each claim may stand on its own as a separate example, it is to be noted that - although a dependent claim may refer in the claims to a specific combination with one or more other claims - other examples may also include a combination of the dependent claim with the subject matter of each other dependent or independent claim. Such combinations are proposed herein unless it is stated that a specific combination is not intended. Furthermore, it is intended to include also features of a claim to any other independent claim even if this claim is not directly made dependent to the independent claim.

It is further to be noted that methods disclosed in the specification or in the claims may be implemented by a device having means for performing each of the respective acts of these methods. Further, it is to be understood that the disclosure of multiple acts or functions disclosed in the specification or claims may not be construed as to be within the specific order. Therefore, the disclosure of multiple acts or functions will not limit these to a particular order unless such acts or functions are not interchangeable for technical reasons. Furthermore, in some examples a single act may include or may be broken into multiple sub acts. Such sub acts may be included and part of the disclosure of this single act unless explicitly excluded.

Furthermore, while each embodiment may stand on its own as a separate example, it is to be noted that in other embodiments the defined features can be combined differently, i.e. a particular feature descripted in one embodiment may also be realized in other embodiments. Such combinations are covered by the disclosure herein unless it is stated that a specific combination is not intended.

### LIST OF REFERENCE SIGNS

- 10: vehicle system
- 50: (vehicle) steering system
- 52: set/target steering angle(s)
- 54: actual steering angle(s)
- 56: sensor for steering angle utilized by the steering system
- 60: vehicle component (e.g. providing data indicative of the steering angle)
- 70: actuating device
- 80: electronic stabilization program (ESP)
- 90: vehicle bus (e.g. CAN)
- 95: (any kind of) electronic control unit
- 100: monitoring system
- 110: receiver (interface to the vehicle bus)
- 120: at least one processor
- 130: interventions for mitigation

## Claims

1. A method for monitoring a steering system (50) of a vehicle by a monitoring system (100), the steering system (50) being configured to set steering angles (52) based on provided control signals, and the monitoring system (100) being independent from the steering system (50),
**characterized by:**
- receiving (S110), by the monitoring system (100), a set steering angle and an actual steering angle (54);
- determining (S120), by the monitoring system (100), a faulty deviation between the actual steering angle (54) and the set steering angle (52) indicating an error effect; and
- mitigating (S130), by the monitoring system (100), the faulty deviation by measures suitable to weaken the error effect.

2. The method according to claim 1, wherein a deviation between the actual steering angle (54) and the set steering angle (52) is tolerable if it is below a threshold and wherein the step of determining the faulty deviation includes determining a deviation exceeding the threshold, wherein the threshold indicates an absolute value or a relative value for the deviation.

3. The method according to claim 1 or claim 2, wherein the step of mitigating includes at least one of the following interventions (130):
- reducing a vehicle speed,
- triggering a steer-by-braking actuation,
- performing wheel-specific braking interventions,
- performing an engine intervention,
- activating a sustained-action brake.

4. The method according to claim 3, wherein the interventions (130) are applied with a strength dependent on a level of the faulty deviation, wherein the level depends on a rate of change of the faulty deviation.

5. The method according to any one of claims 1 to 4, wherein the steering system (50) is configured to receive the actual steering angle (54) from a sensor (56) associated with the steering system (50),
and wherein the monitoring system (100) receives the actual steering angle (54) from a vehicle component (60) being different from the sensor (56) associated with the steering system (50).

6. The method according to any one of claims 1 to 5, wherein the vehicle includes an electronic stabilization program, ESP, configured to stabilize the vehicle in critical driving conditions, and wherein the step of mitigating is performed independently of stabilizing actions performed by the ESP.

7. The method according to any one of claims 1 to 6, wherein the monitoring system is one of the following: a braking system, an engine control system, an autonomous driving system, a transmission control system, an electronic control unit in the vehicle.

8. A machine-readable storage device having stored thereon a machine-executable code including instructions, wherein the instructions perform acts of the methods according any one of claim 1 to 7, when executed on the computer or processor

9. A monitoring system (100) for a steering system (50) of a vehicle, the steering system (50) is external to the monitoring system (100) and is configured to set steering angles (52) based on a provided control signal,
**characterized by:**
a receiver (110) adapted to receive a set steering angle (52) and an actual steering angle (54); and
a processor (120) configured:
- to determine a faulty deviation between the actual steering angle (54) and the set steering angle (52) indicating an error effect; and
- to mitigate the faulty deviation by measures suitable to weaken the error effect.

10. The monitoring system of claim 9, wherein the vehicle is an at least partially autonomously operable utility vehicle and wherein the receiver is an interface for a vehicle bus to receive the set steering angle (52) from an autonomous driving system.

11. A vehicle, in particular utility vehicle, with a steering system (50) and a vehicle system, wherein steering system (50) and the vehicle system (10) are independent vehicle components and the vehicle system 10 includes a monitoring system 100 according to claim 9 or claim 10.
